# EUROPÄISCHE PATENTSCHRIFT

(11) **EP 1 320 766 B1**
(45) Veröffentlichungstag und Bekanntmachung des Hinweises auf die Patenterteilung: **04.11.2009**
(21) Anmeldenummer: 01957669.3
(22) Anmeldetag: 10.08.2001
(51) Int. Cl.: G01S 17/36, G01S 7/491, H04B 10/158

(54) **VORRICHTUNG UND VERFAHREN ZUR SIGNALERFASSUNG BEI EINEM ENTFERNUNGSMESSGERÄT**
SYSTEM AND METHOD FOR SIGNAL ACQUISITION IN A DISTANCE METER
DISPOSITIF ET PROCEDE DE DETECTION DE SIGNAL DANS UN APPAREIL TELEMETRIQUE

(30) Priorität: 27.09.2000 CH 189300
(43) Veröffentlichungstag der Anmeldung: 25.06.2003
(73) Patentinhaber: Leica Geosystems AG, 9435 Heerbrugg (CH)
(72) Erfinder: Giger, Kurt, 9464 Rüthi (CH)
(74) Vertreter: Hasler, Erich
(86) Internationale Anmeldenummer: PCT/CH2001/000492
(87) Internationale Veröffentlichungsnummer: WO 2002/027352

(56) Entgegenhaltungen:
- EP-A- 0 679 896
- DE-A- 19 643 287
- US-A- 5 179 286
- PATENT ABSTRACTS OF JAPAN vol. 006, no. 255 (P-162), 14. Dezember 1982 (1982-12-14) & JP 57 151807 A (SEKOH GIKEN KK), 20. September 1982 (1982-09-20)

## Beschreibung

Die Erfindung betrifft ein Entfernungsmessgerät, insbesondere eine Vorrichtung und ein Verfahren zur Signalerfassung bei einem Entfernungsmessgerät gemäss dem Oberbegriff des unabhängigen Vorrichtungsanspruchs 1 bzw. dem Oberbegriff des unabhängigen Verfahrensanspruchs 13..

Entfernungsmessgeräte der gattungsgemässen Art sind aus dem Stand der Technik hinlänglich bekannt. Sie weisen einen Entfernungsmessbereich von einigen zehn Metern auf und sind oftmals als Handgeräte ausgebildet. Sie werden hauptsächlich in der Bauvermessung oder im Innenausbau, beispielsweise zum dreidimensionalen Vermessen von Räumen, eingesetzt. Weitere Anwendungsbereiche für Entfernungsmessgeräte sind die geodätische und die industrielle Vermessung. Das Grundprinzip der Entfernungsmessung mit den bekannten Geräten beruht auf der Auswertung einer zeitlichen Veränderung einer Kenngrösse der vom Gerät emitierten und von einem anvisierten Objekt remittierten elektromagnetischen Strahlung. Das Entfernungsmessgerät ist dazu mit einem Sender zur Emission einer intensitätsmodulierten Strahlung ausgestattet. Bei Handgeräten handelt es sich dabei vornehmlich um eine optische Strahlung im sichtbaren Wellenlängenspektrum, um das Anvisieren der Messpunkte zu erleichtern. Die optische Strahlung wird von dem anvisierten Messobjekt remittiert bzw. gestreut und von einem in das Gerät eingebauten Empfänger registriert. Aus der zeitlichen Verzögerung der empfangenen modulierten Strahlung gegenüber der vom Sender emittierten Strahlung ergibt sich die Entfernung zum Messobjekt.

Als Detektoren kommen in den bekannten Entfernungsmessgeräten üblicherweise PIN-Photodioden oder Avalanche-Photodioden zur Wandlung der vom Messobjekt remittierten oder gestreuten Strahlung in elektrische Signale zum Einsatz. Sehr gebräuchlich sind Entfernungsmessgeräte, deren Entferungsbestimmung auf dem Messprinzip der Phasenmessung beruht. Bei derartigen Geräten wird das elektrische Empfangssignal direkt an der Avalanche-Photodiode oder nach einem Vorverstärker mit einer Steuerfrequenz zu einem niederfrequenten Messsignal überlagert. Auf diesem niederfrequenten Signal wird die Phase bestimmt und mit der Phase eines Referenzsignals verglichen. Die Differenz der gemessenen Phase des niederfrequentent Messsignals zur Phase des Referenzsignals ist ein Mass für die Entfernung des Messobjekts.

Aus der DE-A-196 43 287 sind ein Verfahren und eine Vorrichtung zur Kalibrierung von Entfernungsmessgeräten bekannt. Insbesondere ist dort beschrieben, wie beim Einsatz einer Avalanche-Photodiode eine stabile Referenzphase erzeugbar ist, um damit die Messgenauigkeit auch bei verschiedenen Umwelteinflüssen und gerätebedingten Einflüssen garantieren zu können. Avalanche-Photodioden weisen gegenüber anderen bekannten Photodioden, beispielsweise PIN-Photodioden, eine etwa 100-fach höhere Verstärkung und damit eine entsprechend grössere Empfindlichkeit auf. Um diese hohe Verstärkung zu erreichen, benötigen sie im Betrieb deutlich höhere Arbeitsspannungen, die stark von der Arbeitstemperatur der Avalanche-Photodiode abängig ist. Die Arbeitsspannung wird als Vorspannung an die Avalanche-Photodiode angelegt und ist überdies individuell, von Photodiode zu Photodiode verschieden. Avalanche-Photodioden werden in einem mehrstufigen, hochspezialisierten Halbleiterprozess hergestellt. Eine zusätzliche Integration von Schlatungskomponenten, durch welche die erforderliche Vorspannung stabilisiert und auf ein zwechmässiges Niveau reduziert wird, würde den Herstellungsprozess noch weiter verkomplizieren und die ohnehin schon hohen Kosten für Avalanche-Photodioden noch weiter erhöhen. Die erforderliche hohe Vorspannung und die erhöhte Stromaufnahme erweisen sich insbesondere für tragbare Handgeräte als nachteilig, die mit Batterien oder Akkumulatoren betrieben werden. Die grössere Anzahl von konventionellen Batterien erfordert grössere und damit unhandlichere Gehäuse. Ausserdem ist die Einsatzbereitschaft dieser batteriebetriebenen Geräte relativ kurz. Die Verwendung spezieller Batterien oder Akkumulatoren wirkt sich ebenfalls auf die Grösse und die Handlichkeit der Handgeräte aus und schlägt sich überdies in einem erhöhten Preis nieder.

Aufgabe der Erfindung ist es daher, ein Entfernungsmessgerät zu schaffen, das eine geringere Stromaufnahme aufweist. Das Gehäuse des Geräts soll klein gehalten werden können, damit insbesondere bei Handgeräten die Handlichkeit gewährleistet ist. Dabei sollen die Kosten für die Herstellung des Geräts niedrig gehalten werden können.

Die Lösung dieser Aufgaben erfolgt durch eine Vorrichtung und ein Verfahren zur Signalerfassung bei einem Entfernungsmessgerät, welche die im kennzeichnenden Abschnitt der jeweiligen unabhängigen Vorrichtungs- bzw. Verfahrensansprüche aufgelisteten Vorrichtungs- bzw. Verfahrensmerkmale aufweisen. Bevorzugte Ausführungsvarianten und/oder Weiterbildungen der erfindungsgemässen Vorrichtung bzw. des erfindungsgemässen Verfahrens sind in den jeweiligen abhängigen Vorrichtungs- bzw. Verfahrensansprüchen festgehalten. Insbesondere umfasst die Vorrichtung zur Signalerfassung bei einem Entfernungsmessgerät wenigstens einen lichtelektrischen Empfänger, der eine über eine Modulationsfrequenz hochfrequent modulierte, elektromagnetische Strahlung detektiert und in hochfrequente elektrische Signale umwandelt, und eine Einrichtung zur Umformung der vom lichtelektrischen Empfänger gelieferten, hochfrequenten elektrischen Signale in niederfrequente Messsignale, die an eine nachgeschaltete Signalverarbeitung weiterleitbar sind. Die Einrichtung zur Umformung der vom lichtelektrischen Empfänger gelieferten, hochfrequenten elektrischen Signale in niederfrequente Messsignale umfasst gemäss der Erfindung wenigstens einen Schalter, dessen Schaltfrequenz von einer Steuerfrequenz gesteuert ist, deren Frequenz um die Frequenz des niederfrequenten Messsignals grösser oder kleiner ist als die Modulationsfrequenz. Der hochfrequent betätigbare Schalter ist mit einem nachgeschalteten Kondensator verbunden, an den ein Transimpedanzverstärker anschliesst, an dessen Ausgang im Betrieb das niederfrequente Messsignal vorliegt.

Bei der erfindungsgemässen Schaltungsanordung ist der Ausgang des lichtelektrischen Empfängers direkt an einen Schalter gelegt. Das hochfrequente elektrische Signal wird wird durch den gleichfalls hochfrequent geschalteten Schalter auf einen Kondensator geleitet. Die Schaltfrequenz des Schalters ist geringfügig grösser oder kleiner als die Modulationsfrequenz der emittierten elektromagnetischen Strahlung. Dem Kondensator ist ein Transimpedanzverstärker angekoppelt, an die die am Kondensator gesammelte Ladung abgeführt wird. Die Spannung am Kondensator bleibt derart praktisch nahezu konstant.Am Ausgang des Transimpedanzverstärkers liegt ein niederfrequentes Messsignal an, das in gewohnter Weise in der nachgeschalteten Signalverarbeitung ausgewertet wird. Der hochfrequent betreibbare Schalter ersetzt den von den Geräten des Stands der Technik her bekannten, relativ komplexen Mischer, in dem die vom lichtelektrischen Empfänger gelieferten, hochfrequenten elektrischen Signale mit einer Steuerfrequenz überlagert werden, um aus den hochfrequenten Signalen niederfrequente Messsignale zu erzeugen. Der Schalter ist über die angelegte Steuerfrequenz derartig betrieben, dass immer die gleiche Halbwelle des hochfrequenten elektrischen Signals an den Kondensator durchgeschaltet wird. Vom Kondensator wird die durchgeschaltete Ladung bereits niederfrequent an den Transimpedanzverstärker weitergeleitet. Im Gegensatz zu den bekannten Lösungen muss daher nicht ein hochfrequentes elektrisches Signal (vor-) verstärkt werden. Dies hat den grossen Vorteil, dass der Transimpedanzverstärker im Gegensatz zu den bekannten Lösungen keine Bandbreite im Bereich von einigen hundert Megahertz aufweisen muss, was sich in einer Transimpedanz von nur einigen Kiloohom auswirkt. Bei der erfindungsgemässen Lösung reichen hingegen Transimpedanzverstärker für niederfrequente Signale mit wenigen Kilohertz Bandbreite aus. Mit diesen sind Transimpedanzen erreichbar, die bis zu einem Faktor 10³ grösser sind. Berücksichtigt man, das bei mittlerer Umgebungshelligkeit bei Entfernungsmessgeräten gerade der Vorverstärker des Messsignals rauschdominant ist, dann ist die erzielbare Verbesserung des Signal/Rauschen Verhältnisses unmittelbar einsichtig. Bei den eingesetzten Transimpedanzverstärkern ist das thermische Rauschen des Rückkopplungswiderstands massgebend. Der Signalpegel am Ausgang des Transimpedanzverstärkers steigt linear mit dem Rückkopplungswiderstand an; das Rauschen am Ausgang steigt jedoch nur porportional mit der Quadratwurzel des Rückkopplungswiderstands. Die durch die erfindungsgemässe Schaltungsanordnung einsetzbaren Transimpedanzverstärker mit relativ kleiner Bandbreite besitzen gerade besonders hohe Rückkopplungswiderstände und fähren demnach zu einer deutlichen Verbesserung des Signal/Rauschen Verhältnisses. Auf diese Weise lassen sich auch mit einfachen PIN-Photodioden Signal/Rauschen Verhältnisse erzielen, die denen bei der Verwendung von Avalanche Photodioden entsprechen. Hingegen werden die bekannten Nachteile der Avalanche Photodioden vermieden.

Für die Verbesserung der Signalpegel erweist es sich von Vorteil, die sequentielle Anordnung des über die hochfrequente Steuerfrequenz gesteuerten Schalters, des nachgeschalteten Kondensators und des Transimpedanzschalters in doppelter Ausführung vorzusehen. Die beiden Schalter sind mit der Steuerfrequenz abwechselnd schaltbar. Dadurch werden beide Halbwellen des hochfrequenten elektrischen Signals am Ausgang des lichtelektrischen Empfängers aufsummiert und jeweils einem Transimpedanzverstärker zugeführt. Die Ausgänge der beiden Transimpedanzverstärker sind mit den Eingängen eines die beiden inversen, niederfrequenten Messsignale zusammenführenden Differenzverstärkers verbunden sind. Durch diese Massnahme kann das Signal/Rauschen Verhältnis noch weiter verbessert werden.

Die erfindungsgemässe Schaltungsnaordnung liefert die Voraussetzungen für ein Integration der Signalerfassungsvorrichtung auf einem Halbleiterbauteil. Dabei sind unterschiedliche Integrationsstufen möglich. In jedem Fall ist es zweckmässig, die hochohmigen Schalter als Feldeffekttransistoren auszubilden. Dabei kommt vorzugsweise ein integriertes Halbleiterbauteil in C-MOS Technolog zum Einsatz. Die in dieser Technologie realisierbaren Transfergates weisen die erforderlichen hohen Schaltgeschwindigkeiten auf und zeichnen sich durch eine geringe Stromaufnahme und kleine Versorgungsspannungen aus. In einer fortgeschritteneren Stufe der Integration sind die Kondensatoren und die nachgeschalteten Transimpedanzverstärker auf dem integrierten Halbleiterbauteil angeordnet. Durch die daraus resultierende Verringerung der Signalpfade insbesondere der hochfrequenten Signale ist auch die Abstrahlung verringert. Es ist sogar möglich, die Schaltungsanordung zur Erzeugung der Steuerfrequenz auf dem Halbleiterbauteil zu integrieren, um Störeinflüsse durch die separate Führung hochfrequenter Signalpfade im Gerät zu vermeiden. Der geringe Leistungsverbrauch der integrierten Schaltungsanordnung erweist sich vorteilhaft für den Batterie- oder Akkubetrieb der Entfernungsmessgeräte. Ausserdem entsteht im Betrieb eine geringere Abwärme, was eine grössere Packungsdichte der Bauteile erlaubt und sich vorteilhaft auf die Grösse der Handgeräte auswirkt.

Die gattungsgemässen Entfernungsmessgeräte beruhen auf dem Prinzip der Phasenmessung. Dabei erweist es sich von Vorteil, wenn auch die für den Referenzsignalpfad erforderliche Empfängerschaltung einen zum Messsignalpfad analogen Aufbau aufweist und gleichfalls auf dem integrierten Halbleiterbauteil angeordnet ist. Durch die integrierte Anordnung auf dem selben Halbleitebauteil sind die Kalibrierprobleme elegant gelöst. Die Empfängerschaltungen für die Messsignale und für die Referenzsignale sind thermisch optimal gekoppelt und weisen eine in konventioneller Bauweise kaum erreichbare Symmetrie auf.

In einer weiteren Integrationsstufe kann auch der lichtelektrische Empfänger für die Messstrahlung und gegebenenfalls ein gesonderter lichtelektrischer Empfänger für eine Referenzstrahlung auf dem Halbleiterbauteil integriert sein. Die erfindungsgemässe Schaltungsanordung und die Verwendung der C-MOS Technologie erlaubt, auch diesen Integrationsschritt ohne grössere Schwierigkeiten durchzuführen. Durch die weitere Integration der Empfängeranordung ist eine noch grössere Pakkungsdichte erzielbar und kann die Grösse des Handgeräts verkleinert werden.

Die integrierte Ausbildung des lichtelektrischen Empfängers bietet sehr einfach die Möglichkeit, dessen aktive Fläche segmentiert auszubilden. Beispielsweise kann der lichtelektrische Empfänger mit wenigstens zwei, vorzugsweise drei oder mehr, unabhängig voneinander aktivierbaren Empfängersegmenten ausgestattet sein. Durch diese konstruktive Massnahme wird dem Umstand Rechnung getragen, dass sich der auf die aktive Fläche des lichtelektrischen Empfängers auffallende Messlichtfleck bei einem Übergang von grossen Distanzen zu kleineren Distanzen vergrössert und auch in seiner Lage verschiebt. Dies ist eine Folge der Abbildungseigenschaften der Eingangsoptik des Entfernungsmessgeräts. Durch die Segmentierung der aktiven Fläche des lichtelektrischen Empfänger kann dieser Effekt ausgeglichen werden, und es kann auf aufwändige und fehleranfällige Zusatzoptiken verzichtet werden.

Bei den bekannten Entfernungsmessgeräten muss ein grosser Aufwand betrieben werden, damit die optischen Komponenten und der lichtelektrische Empfänger exakt justiert sind. Die integrierte Ausbildung des lichtelektrischen Empfängers bietet die Möglichkeit, Justierhilfen vorzuschen.

Dazu ist in Nachbarschaft zu zwei senrecht zueinander verlaufenden, aneinandergrenzenden Rändern der aktiven Fläche des lichtelektrischen Empfängers jeweils eine integriert ausgebildete Hilfsphotodiode angeordnet. Mit einer einfachen nachgeschalteten Detektionselektronik ausgestattet bieten die Hilfsphotodioden eine einfache Möglichkeit der Justierung.

Die integrierte Ausbildung des lichtelektrischen Empfängers für die Messstrahlung und gegebenenfalls eines weiteren lichtelektrischen Empfängers für die Referenzstrahlung auf dem Halbleiterbauteil bietet auch die einfache Möglichkeit, optische Filter in integrierter Bauweise vorzusehen. Die integrierte Bauweise hat dabei wiederum den grossen Vorteil, dass die optischen Filter für die lichtelektrischen Empfänger für die Messstrahlung und für die Referenzstrahlung wegen der Homogenität des Herstellverfahrens identische Eigenschaften aufweisen.

Die Modulationsfrequenz der vom Entfernungsmessgerät emittierten elektromagnetischen Strahlung ist auch bestimmend für die Steuerfrequenz, mit der der erfindungsgemässe Schalter betrieben wird. Aus Gründen der Erzielung eines besonders guten Signal/Rauschen Verhältnisses erweisen sich Steuerfrequenzen grösser 100 MHz als vorteilhaft.

Ein Entfernungsmessgerät nach dem Prinzip der Phasenmessung, welches mit der erfindungsgemässen Vorrichtung zur Signalerfassung ausgestattet ist, zeichnet sich durch einen vereinfachten Aufbau aus. Es weist einen geringeren Leistungsverbrauch auf und ist mit einer geringeren Versorgungsspannung betreibbar. Dies ist insbesondere für Handgeräte von Vorteil, die durch die erfindungsgemässe Bauweise auch ein kleineres Gehäuse aufweisen können.

Im folgenden wird die Erfindung unter Bezugnahme auf in den Zeichnungen schematisch dargestellte Ausführungsbeispiele näher erläutert. Es zeigen:
- Fig. 1 - 3: Blockschemata verschiedener Ausführungsvarianten von mit einer erfmdungsgemässen Vorrichtung ausgestatteten Entfernungsmessgeräten;
- Fig. 4: eine schematische Darstellung einer Variante der erfindungsgemässen Vorrichtung; und
- Fig. 5: eine schematische Darstellung einer Variante eines lichtelektrischen Empfängers.

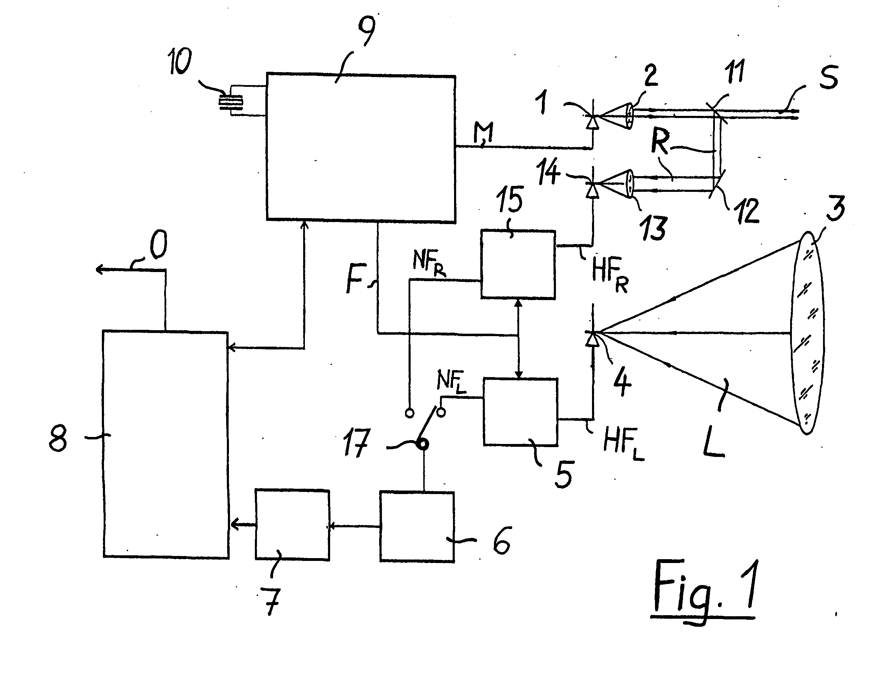

In den Fig. 1 - 3 sind verschiedene Varianten von Entfernungsmessgeräten dargestellt, die mit einer erfindungsgemässen Vorrichtung zur Signalerfassung ausgestattet sind. In den Darstellungen sind gleiche Bauteile und Elemente jeweils mit den gleichen Bezugszeichen versehen. Das Entfernungsmessgerät gemäss Fig. 1 besitzt eine Laserquelle 1, die vorzugsweise sichtbare Laserstrahlung emittiert. Die emittierte und von einer Kollimationsoptik 2 kollimierte Laserstrahlung wird von einem Strahlteiler 11 in ein Messstrahlenbündel S und in ein Referenzstrahlenbündel R aufgeteilt. Als Strahlteiler 11 kommt beispielsweise ein teildurchlässiger Spielgel zum Einsatz. Die Messstrahlung S gelangt zu einem Messobjekt, dessen Abstand vom Entfernungsmessgerät gemessen werden soll. Die vom Messobjekt remittierte oder gestreute Strahlung L wird von einer Empfangsoptik 3 gesammelt und auf einen Messempfänger 4 geleitet. Als Messempfänger 4 kommt beispielsweise eine PIN Fotodiode zum Einsatz. Die Referenzstrahlung R wird von einem Umlenkspiegel 12 umgelenkt und von einer Optik 13 gesammelt und auf einen Referenzempfänger 14 geleitet. Der Referenzempfänger 14 ist mit Vorteil baugleich zum Empfänger 14 für die Messstrahlung L. Die von der Referenzstrahlung R durchlaufene Wegstrecke vom Strahlteiler 11 zum Referenzempfänger 14 bildet die für die Bestimmung der Phasendifferenz benötigte Referenzstrecke.

Der von der Laserquelle 1 emittierten optische Strahlung ist eine hochfrequente Modulationsfrequenz M aufgeprägt, die von einem Frequenzsynthesizer 9 erzeugt ist, der von einem Referenzquarz 10 angesteuert ist. Durch die hochfrequente Modulationsfrequenz M werden am Empfänger 4 und am Referenzempfänger 14 jeweils hochfrequente elektrische Messsignale HF_{L}, HF_{R} erzeugt, die am Eingang von erfindungsgemäss ausgebildeten Vorrichtungen zur Signalerfassung anliegen, welche in Fig. 1 die Bezugszeichen 5 bzw. 15 tragen. Der Frequenzsynthesizer 9 erzeugt auch eine Steuerfrequenz F von ähnlich hoher Frequenz, die über eine Verbindungsleitung den beiden Vorrichtungen zur Signalerfassung 5, 15 zugeführt wird und für beide Vorrichtungen 5, 15 den Takt angibt. In den Vorrichtungen zur Signalerfassung 5, 15, die nachstehende noch näher erläutert werden, werden die hochfrequenten Eingangssignale HF_{L}, HF_{R} in niederfrequente Messsignale NF_{L} bzw. Kalibriersignale NF_{R} umgeformt.

Die am Ausgang der beiden erfindungsgemässen Vorrichtungen zur Signalerfassung 5, 15 anliegenden niederfrequenten Messsignale NF_{L} bzw. Kalibriersignale NF_{R} werden über einen analogen Schalter 17 sequentiell einem Niederfrequenzfilter 6 zugeführt, in dem die restlichen hochfrequenten Signalanteile herausgefiltert werden. Beispielsweise handelt es sich bei dem Filter um ein Anti-Aliasingfilter. Die gefilterten und verstärkten Mess- bzw. Kalibrieisignale NF_{L} bzw. NF_{R} werden in einem Analog/Digital Wandler 7 digitalisiert und in einer digitalen Signalverarbeitungsein- richtung 8 hinsichtlich ihrer Phasenlage ausgewertet. Aus der Phasenlage wird auf die die Entfernung des Messobjekts zurückgeschlossen, die als Signal O an eine Ausgabeeinheit weitergeleitet wird. Die Steuerfrequenz F wird mit Vorteil derart ewählt, dass gilt F = (n x M) ± NF. Die Steuerfrequenz F ist somit ein ganzzahliges Vielfaches der Modulationsfrequenz M vermehrt oder vermindert um den Wert des niederfrequenten Signals NF. Der Wert von n ist dabei grösser als 0**.**

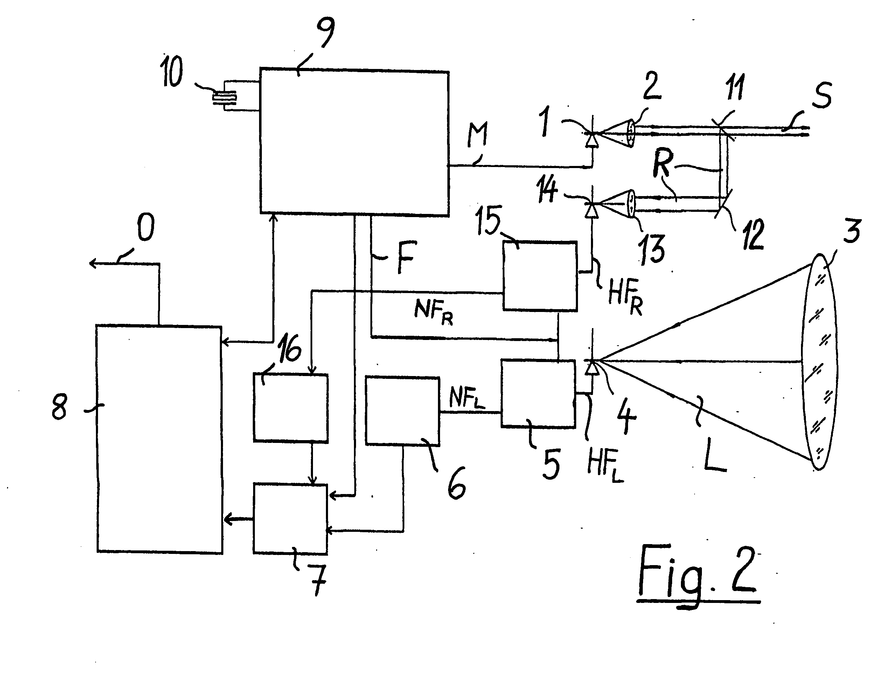

Das in Fig. 2 dargestellte Ausführungsbeipiel eines Entfernungsmessgeräts entspricht weitgehend dem anhand von Fig. 1 erläuterten Gerät. Der wesentliche Unterschied besteht darin, dass der Schaltungsaufbau und die Anordnung der Bauteile es erlauben, die Referenzstrahlung R und die vom Objekt gestreute oder remittierte Strahlung L simultan zu erfassen und auszuwerten. Insbesondere werden die am Ausgang der erfindungsgemässen Vorrichtungen zur Signalerfassung 5, 15 anliegenden niederfrequenten Messsignale NF_{L} bzw. Kalibriersignale NF_{R} jeweils einem eigenen, zugeordneten Niederfrequenzfilter 6 bzw. 16 zugeführt bevor sie nach ihrer Digitalisierung im Analog/Digital Wandler 7 in der digitalen Signalverarbeitungsanlage 8 hinsichtlich der Phasendifferenz ausgewertet werden, um daraus den gesuchten Abstand O des Objekts zu ermitteln. Auf einen analogen Umschalter zwischen dem Messlichtpfad und dem Referenzlichtpfad kann bei dieser Ausführungsvariante verzichtet werden.

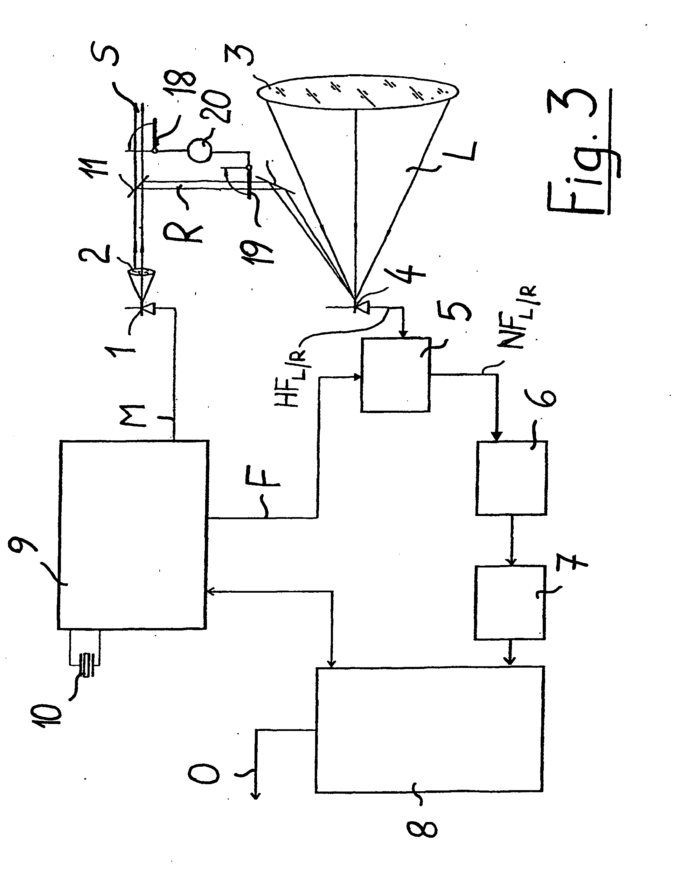

Fig. 3 zeigt schliesslich das Schema eines hinsichtlich der für die Messlicht- bzw. Referenzlichterfassung erforderlichen Bauteile vereinfacht ausgebildeten Entfernungsmessgeräts. Bei dieser Gerätevariante wird der selbe lichtelektrische Messempfänger 4 für die sequentielle Erfassung und Umwandlung der vom Objekt gestreuten oder remittierten Strahlung L und der Referenzstrahlung R eingesetzt. Dazu sind im Messstrahlengang S und im Referenzstrahlengang R nach dem Strahlteiler 11 Blenden 18 und 19 angeordnet, die über einen Motor 20 angetrieben sind und abwechselnd den Strahlengang blockieren. Auf diese Weise gelangt entweder die vom Objekt gestreute oder remittierte Strahlung L oder die Referenzstrahlung R auf den lichtelektrischen Messempfänger 4. Die am Ausgang des lichtelektrischen Empfängers 4, beispielsweise einer PIN Fotodiode anliegenden hochfrequenten elektrischen Signale der Messstrahlung oder der Referenzstrahlung, die in Fig. 3 durch das Bezugszeichen HF_{L/R} angedeutet sind, werden abwechselnd in die erfindungsgemässe Vorrichtung zur Signalerfassung 5 eingespeist. Der Umschalttakt ist durch die Frequenz der in die Strahlengänge R, S eingeschwenkten Blenden 18, 19 festgelegt. Die hochfrequenten elektrischen Signale HF_{L/R} verlassen die Vorrichtung zur Signalerfassung 5 abwechselnd als niederfrequente Messsignale NF_{L/R} und werden einem Niederfrequenzfilter 6 zugeführt, bevor sie in einem Analog/Digital Wandler 7 digitalisiert und in der digitalen Signalauswertung. 8 hinsichtlich ihrer Phasendifferenz ausgewertet werden.

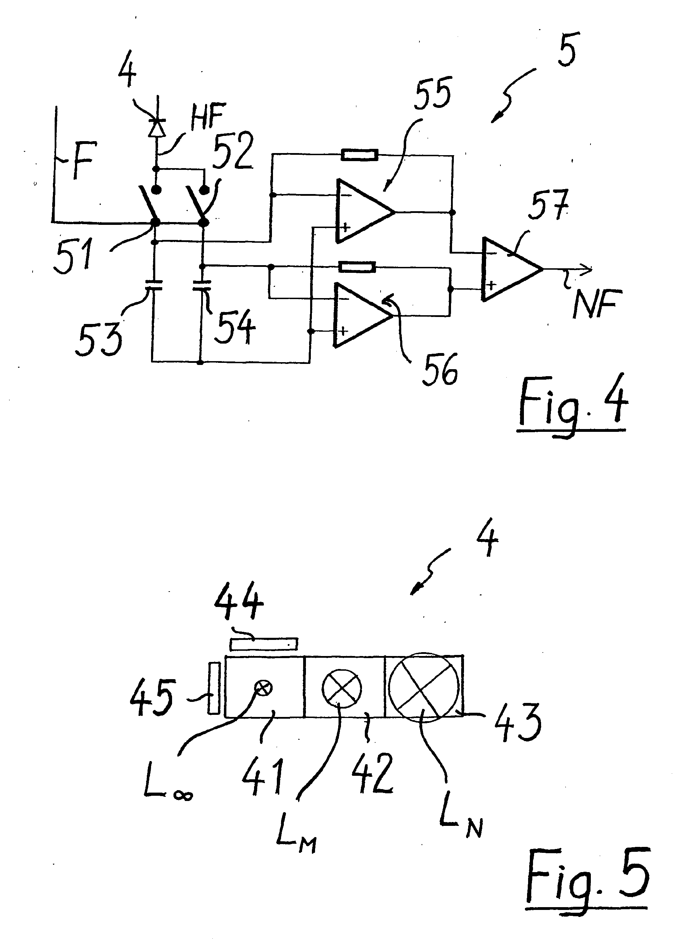

Fig. 4 zeigt schematisch den Aufbau einer Variante der erfindungsgemässen Vorrichtung zur Signalerfassung 5. Das am Ausgang des lichtelektrischen Empfängers 4 anliegende, hochfrequente elektrische Signal HF wird direkt auf einen hochfrequent betreibbaren Schalter 51 gelegt. Der Hochfrequenzschalter 51 wird mit der Steuerfrequenz F betrieben, die nur geringfügig von der hochfrequenten Modulationsfrequenz der Messstrahlung abweicht, wie weiter oben ausgeführt ist. Dabei ist die Steuerfrequenz mit Vorteil grösser als 100 MHz. Das hochfrequente elektrische Signal HF wird im Takt der Steuerfrequenz F auf einen Kondensator 53 geleitet, an den ein Transimpedanzverstärker 55 angekoppelt ist. Die am Kondensator anliegende Ladung wird an den Transimpedanzverstärker 55 abgeleitet. Dabei bleibt die Spannung am Kondensator 53 nahezu konstant. Am Ausgang des Transimpedanzverstärkers 55 entsteht wegen der nur geringfügig von der Modulationsfrequenz der Messstrahlung verschiedenen Schaltrate F des Hochfrequenzschalters 51 ein niederfrequentes Messsignal, das in gewohnter Weise weiterverarbeitet wird, um aus der Phase auf die Entfernung des Objekts zu schliessen. Wegen der nur geringfügig von der Modulationsfrequenz verschiedenen Steuerfrequenz für den Hochfrequenzschalter 51 wird der Kondensator 53 immer nur jeweils mit der positiven oder nur mit der negativen Halbwelle des hochfrequenten Signals HF geladen. Um auch die zweite, negative oder positive Halbwelle für die Signalauswertung zu nutzen, ist parallel zu ersten Schaltkreis ein zweiter Schaltkreis aus Hochfrequenzschalter 52, Kondensator 54 und Transimpedanzverstärker 56 angeordnet. Die Umschaltung zwischen den beiden Schaltkreisen erfolgt mit der Steuerfrequenz F. Dadurch werden durch den einen Schaltkreis nur die positiven Halbwellen und durch den zweiten Schaltkreis nur die negativen Halbwellen des Messsignals durchgeschleust. Die am Ausgang der beiden Transimpedanzverstärker 55, 56 anliegenden invertierten, niederfrequenten Messignale werden in einem nachgeschalteten Differenzverstärker 57 zusammengeführt und als gemeinsames niederfrequentes Messsignal NF weiterverarbeitet.

Der Schaltungsaufbau der erfindungsgemässen Vorrichtung 5 eignet sich insbesondere für verschiedene Grade der Integration auf einem einzigen Halbleiterbauteil. Insbesondere können die Schaltkreise bestehend aus Schalter 51,52, Kondensator 53, 54 und Transimpedanzverstärker 55, 56 und gegebenenfalls Verstärker 57 in C-MOS Technologie erstellt sein. Dabei kann der lichtelektrische Empfänger 4 extern vorliegen oder auf dem Bauteil integriert sein. Die erfindungsgemässe Vorrichtung zur Signalerfassung 5 ist am Beispiel eines einzelnen lichtelektrischen Empfängers 4 erläutert worden. Für Gerätevarianten, bei denen für den Messlichtpfad und für den Referenzlichtpfad separate lichtelektrische Empfänger vorgesehen sind (z.B. Fig. 1 und Fig. 2), können die Vorrichtungen zur Signalerfassung jeweils auf separaten Halbleiterbauteilen integriert vorliegen. Vorzugsweise sind sie jedoch gesamthaft auf einem einzigen Halbleiterbauteil zusammengefasst. Dabei können auch die lichtelektrischen Empfänger und sogar der Generator für die hochfrequente Steuerfrequenz auf einem einzigen Halbleiterbauteil integriert sein.

Fig. 5 zeigt schematisch einen in integrierter Halbleiterbauweise ausgebildeten lichtelektrischen Empfänger 4. Als Besonderheit weist der lichtelektrische Empfänger 4 einen segmentierten aktiven Bereich auf. Insbesondere sind gemäss dem dargestellten Ausführungsbeispiels drei aktive Segmente 41, 42, 43 vorgesehen, die individuell angesteuert sind. Durch die drei Segmente 41. 42, 43 wird den Abbildungseigenschaften der Empfangsoptik Rechnung getragen. Diese bewirken, dass beim Übergang von weit entfernten Messobjekten zu Nahfeldmessungen auf dem lichtelektrischen Empfänger Lichtflecke unterschiedlicher Grösse erzeugt werden, die sich überdies gegenüber der ursprünglichen optischen Achse, die im allgemeinen auf weit entfernte Objekte justiert ist, seitlich verschieben. In Fig. 5 ist diese unterschiedliche Abbildung durch die Lichtflecke L_{∞} , L_{M} , und L_{N} angedeutet. Bisher wird versucht, diese Abbildungsfehler durch spezielle Spiegelanordnungen in der Nachbarschaft des lichtelektrischen Empfängers 4 zu kompensieren. Dies hat aber immer auch den Nachteil, dass störende Umgebungsstrahlung auf den lichtelektrischen Empfänger geleitet wird. Durch die segmentierte Ausbildung des aktiven Bereichs des lichtelektrischen Empfängers 4 kann gezielt nur derjenige Bereich aktiviert werden, auf den das Messlicht auffällt, während die übrigen Bereiche des lichtelektrischen Empfängers 4, auf welche gegebenenfalls Störlicht fällt, deaktiviert sind.

Ein weiterer Vorteil der integrierten Ausbildung des lichtelektrischen Empfängers 4 besteht darin, dass auf dem integrierten Halbleiterbauteil Justierhilfen vorgesehen sein können. Diese bestehen beispielsweise auf Hilfsfotodioden 44, 45, die in Nachbarschaft von zwei zueinander senkrecht verlaufenden Seiten der aktiven Fläche des lichtelektrischen Empfängers 4 angeordnet sind. Wie in dem Ausführungsbeispiel nach Fig. 5 dargestellt ist, sind die Hilfsfoto-dioden 44, 45 in Nachbarschaft zum Segment 41 zur Erfassung weit entfernter Objekte angordnet. Bei der Justierung optischen Achse geben die Hilfsfotodioden beim Auftreffen des Justierlichtstrahls ein Signal und bedeuten damit der die Justierung vornehmenden Person oder Vorrichtung, in welche Richtung die erforderliche Lageveränderung des lichtelektrischen Empfängers 4 vorzunehmen ist. Diese Ausführungsvariante des integrierten lichtelektrischen Empfängers bietet insbesondere für automatisierte Montageeinrichtungen sehr grosse Vorteile. Die integrierte Ausbildung des lichtelektrischen Empfängers 4 bietet auch eine einfache Möglichkeit, optische Filter auf dem Bauteil zu integrieren. Derartige Anordnungen sind beispielsweise von CCD (charge-coupled-devices) Aufnahmebauteilen für digitale Farbfotokameras bekannt und werden auch bei Filmkameras eingesetzt.

## Patentansprüche

1. Vorrichtung zur Signalerfassung bei einem Entfernungsmessgerät umfassend wenigstens einen lichtelektrischen Empfänger (4, 14), der eine über eine Modulationsfrequenz (M) hochfrequent modulierte, elektromagnetische Strahlung (L, R) detektiert und in hochfrequente elektrische Signale (HF_{L} , HF_{R} ) umwandelt, und eine Einrichtung zur Umformung der vom lichtelektrischen Empfänger (4, 14) gelieferten, hochfrequenten elektrischen Signale (HF_{L} , HF_{R} ) in niederfrequente Messsignale (NF_{L} , NF_{R} ), die zur Auswertung an eine nachgeschaltete Signalverarbeitung (8) weiterleitbar sind, **dadurch gekennzeichnet, dass** die Umformeinrichtung für die vom lichtelektrischen Empfänger (4) gelieferten, hochfrequenten elektrischen Signale (HF_{L} , HF_{R} ) einen Schalter (51; 52), dessen Schaltfrequenz von einer Steuerfrequenz (F) gesteuert ist, deren Frequenz geringfügig grösser oder kleiner ist als die Modulationsfrequenz (M), und einen nachgeschalteten Kondensator (53; 54) umfasst, der mit einem Transimpedanzverstärker (55; 56) verbunden ist, an dessen Ausgang im Betrieb das niederfrequente Messsignal (NF_{L} , NF_{R}) vorliegt.

2. Vorrichtung nach Anspruch 1, **dadurch gekennzeichnet, dass** die sequentielle Anordnung des über die hochfrequente Steuerfrequenz (F) gesteuerten Schalters, des nachgeschalteten Kondensators und des Transimpedanzverstärker in doppelter Ausführung vorliegt und abwechselnd schaltbar ist, wobei die Ausgänge der beiden Transimpedanzverstärker (55, 56) mit den Eingängen eines die beiden inversen, niederfrequenten Messsignale zusammenführenden Verstärkers (57) verbunden sind.

3. Vorrichtung nach Anspruch 1 oder 2, **dadurch gekennzeichnet, dass** der bzw. die Schalter (51, 52) als Feldeffekttransistoren ausgebildet sind und vorzugsweise als ein integriertes Halbleiterbauteil in C-MOS Technologie vorliegen.

4. Vorrichtung nach Anspruch 3, **dadurch gekennzeichnet, dass** der bzw. die Kondensatoren (53, 54) und die nachgeschalteten Transimpedanzverstärker (55, 56) und gegebenenfalls der die beiden inversen Messsignale zusammenführende Verstärker (57) auf dem integrierten Halbleiterbauteil angeordnet sind.

5. Vorrichtung nach Anspruch 3 oder 4, **dadurch gekennzeichnet, dass** die für einen Referenzsignalpfad erforderliche Empfängerschaltung einen zum Messsignalpfad analogen Aufbau aufweist und gleichfalls auf dem integrierten Halbleiterbauteil angeordnet ist.

6. Vorrichtung nach Anspruch 4 oder 5, **dadurch gekennzeichnet, dass** der lichtelektrische Empfänger (4) für die Messstrahlung (L) und gegebenenfalls ein gesonderter lichtelektrischer Empfänger (14) für eine Referenzstrahlung (R) auf dem Halbleiterbauteil integriert sind.

7. Vorrichtung nach Anspruch 6, **dadurch gekennzeichnet, dass** der lichtelektrische Empfänger (4) für die Messstrahlung (L) eine segmentierte aktive Fläche aufweist, und wenigstens zwei, vorzugsweise drei oder mehr, unabhängig voneinander aktivierbare Empfängersegmente (41, 42, 43) besitzt.

8. Vorrichtung nach Anspruch 6 oder 7, **dadurch gekennzeichnet, dass** in Nachbarschaft zu zwei senrecht zueinander verlaufenden, aneinandergrenzenden Rändern der aktiven Fläche des lichtelektrischen Empfängers (4) für die Messstrahlung (L) jeweils wenigstens eine integriert ausgebildete Hilfsfotodiode (44, 45) angeordnet ist.

9. Vorrichtung nach einem der Ansprüche 6 - 8, **dadurch gekennzeichnet, dass** der integrierte lichtelektrische Empfänger (4) für die Messstrahlung (L) und gegebenenfalls der lichtelektrische Empfänger (14) für die Referenzstrahlung (R) mit auf dem Halbleiterbauteil integrierten optischen Filtern versehen sind.

10. Vorrichtung nach einem der vorangehenden Ansprüche, **dadurch gekennzeichnet, dass** der lichtelektrische Empfänger für die Messstrahlung und gegebenenfalls der lichtelektrische Empfänger für die Referenzstrahlung als PIN Photodiode ausgebildet ist.

11. Vorrichtung nach einem der vorangehenden Ansprüche, **dadurch gekennzeichnet, dass** die Steuerfrequenz (F) grösser ist als 100 MHz.

12. Entfernungsmessgerät nach dem Prinzip der Phasenmessung, mit einem Sender (1) zur Emission einer optischen Strahlung (S), einer Empfangsoptik (3) für die von einem Messobjekt remittierte oder gestreute optische Messstrahlung (L), einem der Empfangsoptik (3) nachgeschalteten lichtelektrischen Empfänger (4) zur Umwandlung der optischen Strahlung (L) in elektrische Messsignale (HF_{L}) sowie einer Signalverarbeitungsanlage (8) zum Vergleich der Messsignale mit Referenzsignalen und zur Untersuchung hinsichtlich ihrer Phasenlage, um daraus den Abstand (O) des Messobjekts zu bestimmen und das Ergebnis dem Anwender verfügbar zu machen, **gekennzeichnet durch** eine Vorrichtung zur Signalerfassung (5; 15) gemäss einem der vorangehenden Patentansprüche.

13. Verfahren zur Signalerfassung bei einem Entfernungsmessgerät, bei der eine über eine Modulationsfrequenz (M) hochfrequent modulierte, von einem anvisierten Objekt gestreute oder remittierte elektromagnetische Strahlung (L) mit einem lichtelektrischen Empfänger (4) detektiert und in hochfrequente elektrische Signale (HF) umgewandelt wird, die an eine Einrichtung zur Umformung in niederfrequente Messsignale (NF) weitergeleitet werden, welche schliesslich in einer nachgeschalteten Signalverarbeitung (8) ausgewertet werden, **dadurch gekennzeichnet, dass** die am Ausgang des lichtelektrischen Empfängers (4) anliegenden hochfrequenten elektrischen Signale (HF) direkt an einen Schalter (51; 52) angelegt werden, dessen Schaltfrequenz von einer Steuerfrequenz (F) gesteuert ist, deren Frequenz um den Betrag der Frequenz des niederfrequenten Messsignals grösser oder kleiner gewählt ist als die Modulationsfrequenz (M) für die elektromagnetische Strahlung (S), und über den Schalter (51; 52) einem Kondensator (53; 54) zugeführt werden, der mit einem Transimpedanzverstärker (55; 56) verbunden ist, an dessen Ausgang im Betrieb das niederfrequente Messsignal (NF) vorliegt.

14. Verfahren nach Anspruch 13, **dadurch gekennzeichnet, dass** die am Ausgang des lichtelektrischen Detektors (4) vorliegenden, hochfrequenten elektrischen Signale (HF) an einen hochfrequent umschaltbaren Doppelschalter (51, 52) angelegt werden, der mit der Steuerfrequenz (F) derart betreibbar ist, dass die eine Halbwelle der hochfrequenten Signale (HF) dem einen nachgeschalteten Kondensator (53) und dem damit verbundenen Transimpedanzverstärker (55) und die inverse Halbwelle einem zweiten Kondensator (54) und einem damit verbundenen, zweiten Transimpedanzverstärker (56) zugeführt wird, wobei die an den Ausgängen der beiden Transimpedanzverstärker (55, 56) anliegenden niederfrequenten Messsignale den Eingängen eines die beiden inversen, niederfrequenten Messsignale zusammenführenden Differenzverstärkers (57) zugeführt werden, bevor die zusammengeführten niederfrequenten Messsignale (NF) zur weiteren Auswertung an die Signalverarbeitung (8) weitergeleitet werden.

15. Verfahren nach Anspruch 13 oder 14, **dadurch gekennzeichnet, dass** der bzw. die Schalter mit einer Steuerfrequenz betrieben werden, die grösser ist als 100 MHz.

## Claims

1. A device for signal acquisition in a distance meter, comprising at least one photoelectric receiver (4,14), which detects an electromagnetic beam (L, R) that is high-frequency modulated via a modulation frequency (M) and converts it into high-frequency electrical signals (HF_{L}, HF_{R}); and a device having a measuring signal path for transforming the high-frequency electrical signals (HF_{L}, HF_{R}), furnished by the photoelectric receiver (4,14), into low-frequency measuring signals (NF_{L}, NF_{R}), which can be carried onward for evaluation to a signal-processing unit (8) mounted downstream, **characterised in that** the transforming device for the high-frequency electrical signals furnished by the photoelectric receiver (4) includes a switch (51, 52), whose switching frequency is controlled by a control frequency (F) whose frequency is slightly greater or less than the modulation frequency (M); and a downstream capacitor (53, 54), which is connected to a transimpedance amplifier (55, 56)at whose output, in operation, the low-frequency measuring signal (NF_{L}, NF_{R}) is present.

2. The device of claim 1, **characterised in that** a sequential arrangement of the switch controlled via the high-frequency control frequency (F), the downstream capacitor, and the transimpedance amplifier is present in dual form and can be switched in alternation, and outputs of the two transimpedance amplifiers (55, 56) are connected to inputs of an amplifier (57) that unites two inverse, low-frequency measuring signals.

3. The device of claim 1 or 2, **characterised in that** the switches (51, 52) are embodied as field effect transistors and are an integrated semiconductor component of the C-MOS type.

4. The device of claim 3, **characterised in that** the capacitors (53, 54) and the downstream transimpedance amplifiers (55, 56), and optionally the amplifier (57) that unites the two inverse measuring signals are disposed on the integrated semiconductor component.

5. The device of claim 3 or 4, **characterised in that** a receiver circuit for a reference signal path has a structure analogous to the measuring signal path and is disposed on the integrated semiconductor component.

6. The device of claim 4 or 5, **characterised in that** the photoelectric receiver (4) for measuring beam (L) and a separate photoelectric receiver (14) for a reference beam (R) are integrated on the integrated semiconductor component.

7. The device of claim 6, **characterised in that** the photoelectric receiver (4) for the measuring beam (L) has a segmented active face and has at least two, preferable three or more receiver segments (41, 42, 43) that are activatable independently of one another.

8. The device of claim 6 or 7, **characterised in that** at least one auxiliary photodiode (44, 45) embodied in integrated form is disposed in a vicinity of two edges, extending perpendicular to one another and adjacent one another, of the active face of the photoelectric receiver (4) for the measuring beam (L).

9. The device of claim 6 to 8, **characterised in that** the integrated photoelectric receiver (4) for the measuring beam (L) and the photoelectric receiver (14) for the reference beam (R) are provided with integrated optical filters on the integrated semiconductor component.

10. The device of one of the preceding claims, **characterised in that** the photoelectric receiver for the measuring beam and the photoelectric receiver for the reference beam are each embodied as a PIN photodiode.

11. The device of one of the preceding claims, **characterised in that** the control frequency (F) is greater than 100 MHz.

12. A distance meter for phase measurement, comprising an emitter (1) for emitting an optical beam (S); a receiving optical element (3) for an optical measuring beam (L) remitted or scattered by a measurement object; a photoelectric receiver (4), downstream of the receiving optical element (3), for converting the optical beam (L) into electrical measuring signals (HF_{L}); and a signal-processing unit (8) for comparing the measuring signals with reference signals to examine their phase relationship, and to determine a distance (O) of a measurement object, **characterised in that** the meter includes a device for signal acquisition (5, 15) according to one of the preceding claims.

13. A method for signal acquisition in a distance meter, comprising detecting an electromagnetic beam (L), high-frequency modulated via a modulation frequency (M) and scattered or remitted by an object aimed at using a photoelectric receiver (4); converting the electromagnetic beam into a high-frequency electrical signal (HF), which is carried on to a device for transforming into a low-frequency measuring signal (NF); and finally evaluating the low-frequency measuring signal in a downstream signal-processing unit (8), **characterised in that** the transforming into the low-frequency measuring signal (NF) includes; applying the high-frequency electrical signal (HF) present at an output of the photoelectric receiver directly to a switch (51, 52); controlling a switching frequency of the switch by a control frequency (F) whose frequency is selected to be greater or less, by an amount of the frequency of the low-frequency measuring signal, than the modulation frequency (M) for the electromagnetic beam (S); and delivering the low-frequency measuring signal, via the switch (51, 52), to a capacitor (53, 54), which is connected to a transimpedance amplifier (55, 56), at whose output, in operation, the low-frequency measuring signal (NF) is present.

14. The method of claim 13, **characterised in that** the high-frequency electrical signal (HF), present at the output of the photoelectric receiver (4), is applied to a double switch (51, 52) that is operated at the control frequency (F) such that one half-wave of the high-frequency signal (HF) is delivered to a first downstream capacitor (53) and to a transimpedance amplifier (55) connected to the first downstream capacitor (53), and an inverse half-wave is delivered to a second capacitor (56) and to a second transimpedance amplifier connected to the second capacitor, and low-frequency measuring signals present at outputs of the first and second transimpedance amplifiers (55, 56) are delivered to inputs of a differential amplifier (57) that unites two inverse, low-frequency measuring signals, before the low-frequency measuring signals (NF) output from the first and second transimpedance amplifiers (55, 56) are carried on for further evaluation to the signal-processing unit (8).

15. The method of claim 13 or 14, **characterised in that** the switches are operated at a control frequency that is greater than 100 MHz.

## Revendications

1. Dispositif pour l'acquisition d'un signal pour un télémètre comprenant au moins un récepteur photoélectrique (4, 14) qui détecte un rayonnement électromagnétique (L, R) modulé haute fréquence par une fréquence de modulation (M) et qui la transforme en signaux électriques haute fréquence (HF_{L}, HF_{R}) et un dispositif pour la transformation des signaux électriques haute fréquence (HF_{L}, HF_{R}) délivrés par le récepteur photoélectrique (4, 14) en signaux de mesure basse fréquence (NF_{L}, NF_{R}) qui peuvent être transmis à un traitement de signal (8) placé en aval pour l'exploitation, **caractérisé en ce que** le dispositif de transformation pour les signaux électriques haute fréquence (HF_{L}, HF_{R}) délivrés par le récepteur photoélectrique (4) comprend un commutateur (51 ; 52), dont la fréquence de commutation est commandée par une fréquence de commande (F) dont la fréquence est légèrement supérieure ou inférieure à la fréquence de modulation (M), et un condensateur placé en aval (53 ; 54) qui est relié à un amplificateur à transimpédance (55 ; 56) à la sortie duquel il y a, en service, le signal de mesure basse fréquence (NF_{L}, NF_{R}).

2. Dispositif selon la revendication 1, **caractérisé en ce que** l'arrangement séquentiel du commutateur commandé par la fréquence de commande haute fréquence (F), du condensateur placé en aval et de l'amplificateur à transimpédance existe en double exemplaire et peut être commuté en alternance, les sorties des deux amplificateurs à transimpédance (55, 56) étant reliées aux entrées d'un amplificateur (57) qui réunit les deux signaux de mesure inverses basse fréquence.

3. Dispositif selon la revendication 1 ou 2, **caractérisé en ce que** le ou les commutateurs (51, 52) sont configurés comme des transistors à effet de champ et existent de préférence comme un composant à semi-conducteur intégré en technologie CMOS.

4. Dispositif selon la revendication 3, **caractérisé en ce que** le ou les condensateurs (53, 54) et les amplificateurs à transimpédance (55, 56) et, éventuellement les deux amplificateurs (57) qui réunissent qui réunit les deux signaux de mesure inverses basse fréquence, sont placés sur le composant à semi-conducteur intégré.

5. Dispositif selon la revendication 3 ou 4, **caractérisé en ce que** le montage récepteur nécessaire à un chemin de signal de référence présente une structure analogue au chemin du signal de mesure et est également placé sur le composant à semi-conducteur intégré.

6. Dispositif selon la revendication 4 ou 5, **caractérisé en ce que** le récepteur photoélectrique (4) pour le rayonnement de mesure (L) et éventuellement un récepteur photoélectrique séparé (14) pour un rayonnement de référence (R) sont intégrés sur le composant à semi-conducteur.

7. Dispositif selon la revendication 6, **caractérisé en ce que** le récepteur photoélectrique (4) pour le rayonnement de mesure (L) présente une surface active segmentée et possède au moins deux, de préférence trois segments récepteurs (41, 42, 43) pouvant être activés indépendamment l'un de l'autre ou plus.

8. Dispositif selon la revendication 6 ou 7, **caractérisé en ce qu'**au moins une photodiode auxiliaire (44, 45) configurée intégrée est placée respectivement au voisinage de chacun des deux bords adjacents, perpendiculaires l'un à l'autre de la surface active du récepteur photoélectrique (4) pour le rayonnement de mesure (L).

9. Dispositif selon l'une des revendications 6 à 8, **caractérisé en ce que** le récepteur photoélectrique intégré (4) pour le rayonnement de mesure (L) et éventuellement le récepteur photoélectrique séparé (14) pour le rayonnement de référence (R) sont pourvus de filtres optiques intégrés sur le composant à semi-conducteur.

10. Dispositif selon l'une des revendications précédentes, **caractérisé en ce que** le récepteur photoélectrique pour le rayonnement de mesure et éventuellement le récepteur photoélectrique pour le rayonnement de référence est configuré comme photodiode PIN.

11. Dispositif selon l'une des revendications précédentes, **caractérisé en ce que** la fréquence de commande (F) est supérieure à 100 MHz.

12. Télémètre selon le principe de la mesure de phases avec un émetteur (1) pour l'émission d'un rayonnement optique (S), une optique de réception (3) pour le rayonnement de mesure optique (L) réfléchi ou dispersé par un objet à mesurer, un récepteur photoélectrique placé en aval (4) de l'optique de réception (3) pour la transformation du rayonnement optique (L) en signaux de mesure électriques (HF_{L}) ainsi qu'une installation de traitement de signaux (8) pour la comparaison des signaux de mesure aux signaux de référence et pour l'examen quant à leur position de phase pour déterminer, à partir de cela, la distance (O) de l'objet de mesure et pour rendre le résultat accessible à l'utilisateur, **caractérisé par** un dispositif pour l'acquisition d'un signal (5 ; 15) selon l'une des revendications précédentes.

13. Procédé pour l'acquisition d'un signal pour un télémètre pour laquelle un rayonnement électromagnétique (L) dispersé ou réfléchi par un objet visé, modulé haute fréquence par une fréquence de modulation (M) est détecté avec un récepteur photoélectrique (4) et transformé en signaux électriques haute fréquence (HF) qui sont transmis à un dispositif pour la transformation en signaux de mesure basse fréquence (NF) qui sont finalement exploités dans un traitement de signal placé en aval (8), **caractérisé en ce que** les signaux électriques haute fréquence (HF) présents à la sortie du récepteur photoélectrique (4) sont appliqués directement à un commutateur (51 ; 52) dont la fréquence de commutation est commandée par une fréquence de commande (F) dont la fréquence est choisie supérieure ou inférieure à la fréquence de modulation (M) pour le rayonnement électromagnétique du montant de la fréquence du signal de mesure basse fréquence et sont amenés par le commutateur (51 ; 52) à un condensateur (53 ; 54) qui est relié à un amplificateur à transimpédance (55 ; 56) à la sortie duquel il y a, en service, le signal de mesure basse fréquence (NF).

14. Procédé selon la revendication 13, **caractérisé en ce que** les les signaux électriques haute fréquence (HF) présents à la sortie du récepteur photoélectrique (4) sont appliqués à un commutateur double (51, 52) qui peut être commuté en haute fréquence qui peut fonctionner avec la fréquence de commande (F) de telle manière que l'une des demi-ondes des signaux haute fréquence (HF) est amenée à un condensateur placé en aval (53) et à l'amplificateur à transimpédance (55) qui lui est relié et que la demi-onde inverse est amenée à un second condensateur (54) et à un second amplificateur à transimpédance (56) qui lui est relié, les signaux de mesure basse fréquence présents aux sorties des deux amplificateurs à transimpédance (55, 56) étant amenés aux entrées d'un amplificateur différentiel (57) qui réunit les deux signaux de mesure inverses basse fréquence, avant que les signaux de mesure (NF) basse fréquence réunis soient transmis au traitement de signaux (8) pour l'exploitation ultérieure.

15. Procédé selon la revendication 13 ou 14, **caractérisé en ce que** le ou les commutateurs fonctionnement avec une fréquence de commande qui est supérieure à 100 MHz.
